# EUROPÄISCHE PATENTSCHRIFT

(11) **EP 1 291 156 B1**
(45) Veröffentlichungstag und Bekanntmachung des Hinweises auf die Patenterteilung: **10.10.2007**
(21) Anmeldenummer: 02017422.3
(22) Anmeldetag: 03.08.2002
(51) Int. Cl.: B29C 55/06, B29C 55/18

(54) **Verfahren und Vorrichtung zur Herstellung einer atmungsaktiven Materialbahn**
Process and apparatus for the manufacture of breathable web material
Procédé et appareil pour la fabrication d'une bande de matériau respirant

(30) Priorität: 05.09.2001 DE 10143420
(43) Veröffentlichungstag der Anmeldung: 12.03.2003
(73) Patentinhaber: Reifenhäuser GmbH & Co. Maschinenfabrik, 53839 Troisdorf (DE)
(72) Erfinder: Krumm, Klemens, 53819 Neunkirchen-Seelscheid (DE); Reifenhäuser, Klaus, 53844 Troisdorf (DE)
(74) Vertreter: Müller-Gerbes, Margot

(56) Entgegenhaltungen:
- EP-A- 0 232 060
- DE-A- 19 953 039
- US-B1- 6 258 308

## Beschreibung

Die Erfindung betrifft ein Verfahren zum Herstellen einer atmungsaktiven Materialbahn, die zumindest aus einer Schicht auf Basis einer einen mineralischen Füllstoff enthaltenden Kunststoffolie gebildet ist, wobei die Materialbahn in der Weise verstreckt wird, daß Atmungsaktivität der den Füllstoff enthaltenden Kunststoffolie erhalten wird.

Die Erfindung betrifft ferner auch eine Vorrichtung zur Durchführung eines solchen Verfahrens.

Atmungsaktive Materialbahnen auf Basis thermoplastischer Kunststoffe, beispielsweise Verbundbahnen zeichnen sich durch eine gute Luft- und Wasserdampfdurchlässigkeit aus, wobei sie gleichzeitig aufgrund nur geringer Porengrößen für Flüssigkeiten aufgrund der diesen innewohnenden Oberflächenspannungen undurchlässig sind und werden beispielsweise in der Hygieneindustrie, der Bauindustrie, in der Bekleidungsindustrie sowie für verschiedene andere Anwendungen eingesetzt.

Aus der DE 197 09 352 C2 ist eine atmungsaktive Materialbahn aus einer Vliesbahn und einer einseitig auf diese aufgebrachten und mindestens einen mineralischen Füllstoff enthaltenden Kunststoffolie bekannt geworden. Die Atmungsaktivität des Verbundes wird dadurch erreicht, daß die den mineralischen Füllstoff enthaltende Kunststoffolie entweder vor oder nach dem Verbinden mit der Vliesbahn verstreckt wird, wobei zwar die Kunststoffolie an sich aufgrund ihrer Elastizität gereckt wird, nicht jedoch die in dieser enthaltenen Füllstoffe und sich in der Folge an den Korngrenzen der Füllstoffe Poren ausbilden, die die gewünschte Atmungsaktivität der Kunststoffolie bewirken. Die zusätzlich eingesetzte Vliesbahn ist von sich aus bereits von einer Vielzahl von Poren durchsetzt und somit atmungsaktiv und dient in erster Linie als Verstärkungsschicht für die Kunststoffolie.

Ein gattungsgemäßes Verfahren und eine Anlage zur Herstellung einer atmungsaktiven Materialbahn ist beispielsweise aus der EP 09 50 512 A1 bekannt geworden, bei der in einem ersten Schritt zunächst ein Vorverbund aus der Vliesbahn auf Basis von Kunststoffilamenten und/oder Kunststoffasern und einer einseitig auf die Vliesbahn aufgebrachten Beschichtung aus Kunststoffolie erzeugt wird und der Vorverbund nachfolgend in Längs- und Querrichtung verstreckt wird, wodurch Atmungsaktivität der so hergestellten Verbundbahn erhalten wird.

Nachteilig bei den bisher bekannt gewordenen atmungsaktiven Materialbahnen ist deren durch das Verstrecken zwangsläufig erhaltene erhöhte Steifigkeit, die sich zwar in einer guten mechanischen Belastbarkeit ausdrückt, gleichzeitig jedoch eine gegenüber Textilmaterialien deutlich unangenehmere Haptik sowie weitere unerwünschte Eigenschaften, wie Raschelneigung etc. erzeugt. Die bisher bekannten atmungsaktiven Materialbahnen weisen aufgrund des notwendigen hohen Verstreckens derselben nur eine sehr flache, folienartige Struktur auf, die der Erzeugung eines angenehmen textilartigen Griffes entgegensteht.

Aus der EP 02 32 060 B1 ist es ferner bekannt, Atmungsaktivität einer mindestens einen anorganischen Füllstoff enthaltenden Kunststoffolie dadurch zu erhalten, daß diese Folie zumindest vor ihrem Verstrecken geprägt wird, um ein rauhes Muster zu erzeugen, welches die gewünschte Ausbildung der Poren bewirkt. Die solchermaßen hergestellte Kunststoffolie ist jedoch bei ihrer Herstellung sehr starken mechanischen Einwirkungen unterworfen, so daß sie für sich alleine nur eine ungenügende Festigkeit aufweist und darüber hinaus auch keinen textilartigen und damit hautfreundlichen Griff erzeugen kann.

Die Erfindung hat sich daher die Aufgabe gestellt, unter Umgehung der Nachteile des Standes der Technik ein Verfahren und eine Vorrichtung zur Herstellung einer atmungsaktiven Materialbahn vorzuschlagen, die bei geringstem Rohstoffeinsatz die Erzeugung einer voluminösen Struktur mit textilartigem Griff und gleichzeitig guter Wasserdampfdurchlässigkeit und Wasserdichtigkeit, d. h. Atmungsaktivität erreicht.

Zur Lösung dieser Aufgabe wird erfindungsgemäß die Ausbildung eines Verfahrens gemäß den Merkmalen des Patentanspruches 1 vorgeschlagen.

Vorteilhafte Ausgestaltungen und Weiterbildungen des erfindungsgemäßen Verfahrens sind in den Unteransprüchen 2 bis 17 angegeben.

Eine Vorrichtung zur Durchführung des erfindungsgemäßen Verfahrens ist Gegenstand des Anspruches 18, vorteilhafte Ausgestaltungen und Weiterbildungen dieser erfindungsgemäßen Vorrichtung sind in den nachfolgenden Unteransprüchen angegeben.

Zur Lösung der gestellten Aufgabe schlägt die Erfindung vor, daß die Materialbahn in zwei aufeinanderfolgenden Schritten jeweils in Längsrichtung derselben verstreckt wird und zwischen den beiden das Verstrecken in Längsrichtung bewirkenden Schritten zumindest bereichsweise oberflächlich geprägt wird. Die Materialbahn wird damit zum einen durch die Einbringung der oberflächlichen Prägungen in den die Prägung umgebenden Bereichen verstreckt, und zwar biaxial sowohl in Längsrichtung als auch in Breitenrichtung, wie sie auch eine dreidimensionale Struktur erhält. Gleichzeitig wird die Materialbahn jedoch auch in der an sich bekannten Weise einem Verstrecken in Längsrichtung zweifach unterworfen, so daß insgesamt eine zur Erzeugung der Atmungsaktivität in der Kunststoffolie der Materialbahn ausreichende Verstreckung erzielt wird, d. h. Poren eröffnet werden.

Überraschenderweise hat sich gezeigt, daß durch dieses kombinierte erfindungsgemäße Verstrecken, Prägen und erneute Verstrecken der Materialbahn, gleichermaßen ein Streckprägen, eine atmungsaktive Materialbahn erhalten wird, die bei geringstmöglichem Rohstoffeinsatz eine voluminöse Struktur und damit einen textilartigen Griff und gleichzeitig gute Atmungsaktivität und Wasserdichtigkeit auch gegenüber hohen Wassersäulen aufweist.

Mit Vorteil wird das erfindungsgemäße Verfahren in der Weise durchgeführt, daß die Materialbahn in einem zwischen zwei Prägewalzen ausgebildeten Streckprägespalt geprägt wird, wobei die Materialbahn zunächst über ein Haltewalzenpaar der ersten Prägewalze unter Ausbildung eines ersten Streckspaltes zugeführt wird und im Streckspalt in Längsrichtung derselben verstreckt wird, sodann unter teilweiser Umschlingung der ersten Prägewalze dem Streckprägespalt zugeführt wird und nach dem Durchtritt durch den Streckprägespalt unter teilweiser Umschlingung der zweiten Prägewalze abgeführt wird und nachfolgend über ein Walzenpaar unter Ausbildung eines zweiten Streckspaltes zwischen der Prägewalze und dem Walzenpaar geführt wird und die Materialbahn im zweiten Streckspalt erneut in Längsrichtung derselben verstreckt wird.

Um den Grad des Einprägens der auf den Prägewalzen aufgebrachten Prägestruktur in die Materialbahn variieren zu können und damit sowohl den Grad des durch das Prägen bewirkten quasi biaxialen Verstreckens in Anpassung an die Dicke der Materialbahn variieren zu können, wird erfindungsgemäß ferner vorgeschlagen, daß die Umschlingungswinkel α 1, α2, in denen die Materialbahn auf den Prägewalzen aufliegt, veränderbar sind.

Vorteilhaft werden beide Oberflächen der Materialbahn wechselweise mit miteinander korrespondierenden, geometrisch versetzt zueinander angeordneten und gerasterten Einprägungen dergestalt geprägt, daß bei Ausbildung einer Vertiefung in einer Oberfläche der Materialbahn auf der anderen Oberfläche im korrespondierenden Bereich eine Erhöhung ausgebildet wird und umgekehrt. Hierbei können insbesondere kegel- oder pyramidenstumpfartige Einprägungen in die Materialbahn eingeprägt werden.

Während das Prägen der die Kunststoffolie aufweisenden Oberfläche des Vorverbundes in erster Linie ein Mikrostrecken der die Prägung umgebenden Bereiche der Kunststoffolie bewirkt, welches das Öffnen der Poren der Kunststoffolie unterstützt, erzeugt die Prägung der die Vliesbahn aufweisenden Oberfläche des Vorverbundes die gewünschte voluminöse und bauschige Struktur derselben, die für den textilartigen Griff der solchermaßen erzeugten erfindungsgemäßen atmungsaktiven Verbundbahn verantwortlich zeigt.

Das Verstrecken in Längsrichtung und Prägen bzw. Streckprägen der Materialbahn wird vorteilhaft mittels zweier Prägewalzen bewirkt, die mit gleicher Drehzahl und gegenläufigem Drehsinn angetrieben werden und das Haltewalzenpaar und das Walzenpaar mit demgegenüber unabhängig einstellbaren Drehzahlen angetrieben werden. Diese Prägewalzen erfüllen somit zwei Aufgaben, nämlich einerseits das Einbringen der oberflächlichen Prägemuster in die Materialbahn und damit die quasi biaxiale Verstreckung derselben und andererseits auch die Verstreckung der Materialbahn in deren Längsrichtung, wozu die Prägewalzen mit entsprechenden Drehzahlen betrieben werden, was nachfolgend noch näher erläutert wird. Wesentlich für das erfindungsgemäße Verfahren ist es jedoch, daß der auf den Prägewalzen aufliegende Vorverbund neben dem Einprägen des Prägemusters in dessen jeweils auf der Prägewalze aufliegende Oberfläche auch einer deutlichen Verstreckung in Längsrichtung unterworfen ist, so daß die atmungsaktive Materialbahn mit dem gewünschten textilartigen Griff erzeugt wird.

Vorzugsweise ist hierbei vorgesehen, daß der Vorverbund zunächst auf seiner die Kunststoffolie aufweisenden Oberfläche und anschließend auf seiner die Vliesbahn aufweisenden Oberfläche geprägt wird. Diese Reihenfolge ist jedoch nicht zwingend und kann bei Bedarf auch umgekehrt vorgesehen werden.

Zur Schaffung eines guten Präge- und Streckergebnisses kann die Materialbahn ferner vor dem Prägen und Verstrecken vorgewärmt werden, z. B. bei Herstellung derselben aus einem Polyolefinverbund auf eine Temperatur von 80 bis 100°C, wozu entsprechende Vorwärmeinrichtungen vorgesehen werden können, und das Verstrecken der Materialbahn in Längsrichtung derselben wird sodann bei einer Temperatur der Materialbahn von beispielsweise etwa 90 bis 98°C durchgeführt.

Gemäß einer vorteilhaften Ausführungsform des erfindungsgemäßen Verfahrens wird die Materialbahn in der Weise geprägt, daß je nach Form der Prägestruktur eine Profilhöhe der Prägung bis zum Einhundertfachen der Dicke der ungeprägten Materialbahn erzeugt wird.

Da die Materialbahn durch das zusätzlich zu dem Verstrecken in Längsrichtung erfolgende Streckprägen in den die eingebrachten Prägungen umgebenden Bereichen auch eine Mikroverstreckung in quasi biaxialer Ausrichtung, nämlich in Längs- und Querrichtung erfährt, kann beim erfindungsgemäßen Verfahren das zum Öffnen der Poren und Erzielen der Atmungsaktivität erforderliche Verstrecken in Längsrichtung gegenüber den bekannten Verfahren ggf. verringert werden, wodurch die Materialbahn während ihres Verstreckens einer reduzierten mechanischen Belastung unterworfen wird. Die voluminöse Struktur und der textilartige Griff wird dadurch gefördert.

Nach einer möglichen Ausführungsform der Erfindung wird mit dem erfindungsgemäßen Verfahren eine einschichtige atmungsaktive Materialbahn aus der füllstoffhaltigen Kunststoffolie mit einer Dicke von etwa 20 bis 50 µm hergestellt, die zur Schaffung der Atmungsaktivität im Verhältnis von bis zu 1:2 in Längsrichtung in den beiden das Verstrecken in Längsrichtung bewirkenden Schritten verstreckt wird, um Atmungsaktivität zu erhalten. Hieraus ergibt sich in der Summe eine Gesamtverstreckung in Längsrichtung von bis zu 1:4.

Nach einer alternativen Ausführungsform der Erfindung kann eine Materialbahn mit mehrschichtigem Aufbau, insbesondere mit einer Schicht aus einer Vliesbahn auf Basis von Kunststoffilamenten und/oder Kunststoffasern mit einem Flächengewicht von 10 bis 50 g/m² und einer mit dieser haftfest verbundenen weiteren Schicht aus der füllstoffhaltigen Kunststoffolie mit einem Flächengewicht von 5 bis 35 g/m² eingesetzt werden. Zur Schaffung der Atmungsaktivität der eine Schicht ausbildenden füllstoffhaltigen Kunststoffolie reicht es beim erfindungsgemäßen Verfahren aus, die Materialbahn in den beiden entsprechenden Schritten jeweils im Verhältnis 1:1,15 bis 1:1,4 in Längsrichtung derselben zu verstrecken.

Der Einsatz der erfindungsgemäßen Streckprägung zwischen den Längsverstreckungsschritten bewirkt eine weitere Reduzierung des Längsverstreckungsverhältnisses bis zu 30%, um vergleichbare Werte für die Atmungsaktivität zu erreichen.

Das Streckprägen bewirkt, daß die Oberflächen der Materialbahn mit verschiedensten Prägemustern geprägt werden, beispielsweise mit rasterartig ausgebildeten Prägemustern, die darüber hinaus vorteilhaft auf beiden Oberflächen der Materialbahn versetzt zueinander angeordnet werden, d. h. bei Ausbildung einer Vertiefung in einer Oberfläche der Materialbahn wird auf der anderen Oberfläche der Materialbahn im korrespondierenden Bereich keine Vertiefung ausgebildet und umgekehrt.

Zur Anpassung an unterschiedliche Rohstoffe und Schichtdicken der eingesetzten Materialbahn kann das Streckprägen der einzelnen Oberflächen derselben bei unterschiedlichen Temperaturen durchgeführt werden.

Vorteilhafte mechanische Eigenschaften der atmungsaktiven Materialbahn können dadurch erhalten werden, daß diese nach ihrem Prägen und Verstrecken getempert wird.

Es werden bevorzugt Polyolefine, beispielsweise Polyethylen, Polypropylen Homo- oder Copolymere oder Abmischungen derselben zur Ausbildung der Materialbahn, sowohl in deren ein- als auch mehrschichtigen Ausführungsformen verwendet. Die Kunststoffolie der Materialbahn kann beispielsweise bis zu 70 % mineralische Füllstoffe, wie Calciumcarbonat, enthalten.

Weitere vorteilhafte Ausgestaltungen des erfindungsgemäßen Verfahrens und insbesondere auch der erfindungsgemäß vorgesehenen Vorrichtung zur Durchführung des Verfahrens werden nachfolgend anhand der schematischen und lediglich ein Ausführungsbeispiel darstellenden Zeichnungen näher erläutert. Es zeigen:
- Figur 1: eine schematische Darstellung einer Vorrichtung zur Durchführung des erfindungsgemäßen Verfahrens,
- Figur 2: in ausschnittsweiser vergrößerter Darstellung den Aufbau der Materialbahn gemäß Figur 1,
- Figur 3: in schematisierter Darstellung das Prägestreckmuster, welches auf die Materialbahn aufgebracht wird,
- Figur 4: in schematisierter Darstellung die Anordnung der Prägewalzen der Vorrichtung,
- Figur 5: in vergrößerter Darstellung die Einzelheit X in Figur 4.

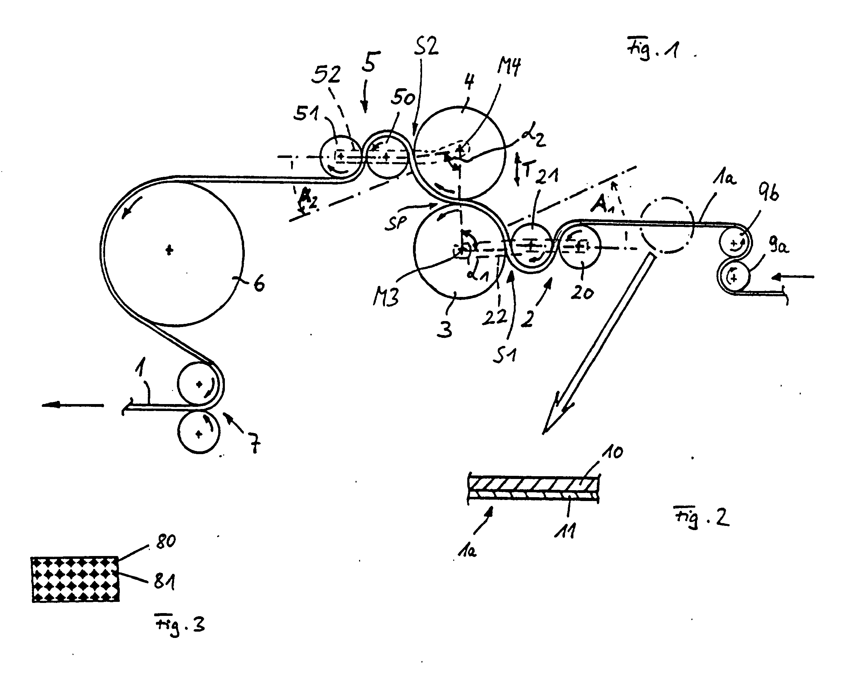

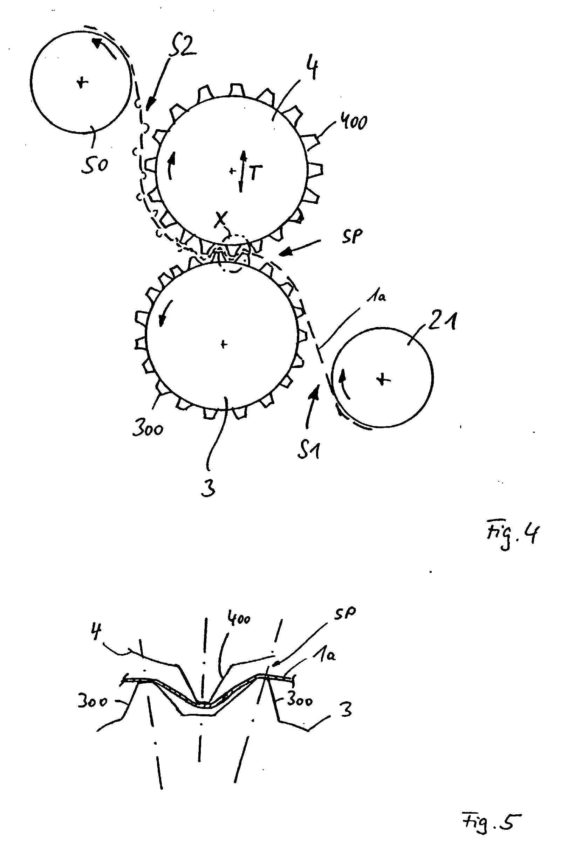

In der Figur 1 ist in schematisierter Darstellung eine Vorrichtung zur Herstellung einer atmungsaktiven Materialbahn 1 aus einem Vorverbund 1 a, umfassend eine Vliesbahn 10 auf Basis von Kunststoffilamenten und/oder Kunststoffasern beispielsweise aus Polypropylen-Homopolymer und einer einseitig auf die Vliesbahn 10 aufgebrachten und mindestens einen mineralischen Füllstoff enthaltenden ein- oder mehrschichtigen Kunststoffolie 11, beispielsweise ebenfalls auf PP-Homopolymer und/oder PP-Copolymer dargestellt, siehe hierzu auch Figur 2.

Die Vorrichtung umfaßt in ihren in der Figur 1 dargestellten Teilen und in Laufrichtung der Materialbahn 1 bzw. des Vorverbundes 1a betrachtet zunächst eine Vorwärmeinrichtung mit Heizwalzen 9a, 9b für den Vorverbund, ein Haltewalzenpaar 2 mit Haltewalzen 20, 21, denen der Vorverbund 1a von den Heizwalzen 9a, 9b aus einer nicht dargestellten Zuführeinrichtung zugeführt wird, zwei Prägewalzen 3, 4 mit dazwischen ausgebildetem Streckprägespalt SP, denen das Haltewalzenpaar 2 vorgeordnet ist, sowie ein Walzenpaar 5, welches den Prägewalzen 3, 4 nachgeordnet ist. Ferner umfaßt die Vorrichtung eine Temperwalze 6 sowie eine Abzugseinrichtung 7 für die erhaltene atmungsaktive Materialbahn 1. Die Durchlaufrichtung des Vorverbundes 1a bzw. der daraus erhaltenden Materialbahn 1 sowie die Drehrichtung sämtlicher Walzen der Vorrichtung sind in Figur 1 mit Pfeilen dargestellt.

Der Vorverbund 1a, der zur Herstellung der atmungsaktiven Verbundbahn 1 von einer nicht dargestellten Zuführeinrichtung der Vorrichtung zugeführt wird, kann beispielsweise durch separates Herstellen der Vliesbahn 10 und der den mineralischen Füllstoff enthaltenen Kunststoffolie 11 und nachfolgendes Verbinden derselben oder auch durch ein Inlineverfahren, wie es beispielsweise in der EP 09 50 512 A1 angegeben ist und deren Offenbarungsgehalt hier ausdrücklich mit einbezogen wird, in einem ersten Schritt hergestellt worden sein. Hierbei kann die Kunststoffolie 11 als Polyolefin-Folie, beispielsweise auf Basis von Polypropylen-Homopolymer und/oder Polypropylen-Copolymer bis zu 70 % eines mineralischen Füllstoffes, insbesondere Calciumcarbonat enthalten.

Der solchermaßen in an sich bekannter Weise ausgebildete Vorverbund 1a wird, wie aus Figur 1 ersichtlich, zunächst über die Vorwärmeinrichtung mit den Heizwalzen 9a, 9b geführt, wo er auf ca. 80 bis 100°C vorgewärmt wird. Sodann gelangt der vorgewärmte Vorverbund 1a zu dem Haltewalzenpaar 2 mit Haltewalzen 20, 21, über die der Vorverbund in teilweiser Umschlingung geführt und nachfolgend einer dem ersten Haltewalzenpaar 2 nachgeordneten Prägewalze 3 zugeführt wird. Die Zuführung des Vorverbundes 1a zur Prägewalze 3 erfolgt in der Weise, daß der Vorverbund mit seiner den mineralischen Füllstoff enthaltenden Kunststoffolie 11 aufweisenden Oberfläche auf der Prägewalze 3 aufliegt.

Die Prägewalze 3 ist ebenso wie die Walzen 20, 21 des Haltewalzenpaares 2 über nicht näher dargestellte Drehantriebe drehbar angetrieben. Sie weist eine Prägestruktur auf ihrer der Kunststoffolie 11 des Vorverbundes 1a zugewandten Oberfläche auf, die rasterartig und regelmäßig angeordnete Erhebungen 80 enthält. Diese können beispielsweise von rautenförmiger Gestalt sein, siehe hierzu Figuren 3, 4 und 5.

Zwischen der Haltewalze 21 und der Prägewalze 3 wird ein mit Bezugszeichen S1 gekennzeichneter erster Streckspalt S1 für den Vorverbund 1a der Materialbahn 1 ausgebildet, siehe insbesondere Figur 4.

Die Prägewalze 3 wird mit einer höheren Drehzahl als die Haltewalzen 20, 21 des ersten Haltewalzenpaares 2 betrieben, so daß der Vorverbund 1a im Streckspalt S1 zwischen der Prägewalze 3 und der Haltewalze 21 in Längserstreckung in einem definierten Verhältnis verstreckt wird. Diese Verstreckung liegt vorteilhaft im Verhältnis 1:1,15 bis 1:1,4 und kann durch getrennt regelbare Drehantriebe für Prägewalze 3 und Haltewalzenpaar 2 eingestellt werden.

Infolge des Prägemusters der Prägewalze 3 wird ein guter Reibschluß zwischen Vorverbund 1a und Prägewalze 3 erzielt, der das Verstrecken in Längsrichtung unterstützt.

Nachdem der solchermaßen in einem ersten Schritt in Längsrichtung verstreckte Vorverbund 1a über einen einstellbaren Umschlingungswinkel α 1 auf der Oberfläche der Prägewalze 3 geführt worden ist, gelangt dieser in den Streckprägespalt SP zwischen den gegensinnig und mit gleicher Drehzahl rotierenden Prägewalzen 3, 4.

Wie insbesondere aus den Figuren 4 und 5 aufgrund deren vergrößerten Maßstabes gegenüber Figur 1 ersichtlich ist, weisen sowohl die Prägewalze 3 als auch die Prägewalze 4 vorstehende Prägestrukturen 300, 400 von beispielsweise pyramiden- oder kegelstumpfartiger Gestalt auf, die entsprechend des in der Figur 3 dargestellten Prägemusters jeweils versetzt zueinander angeordnet sind und nach Art von miteinander kämmenden Zahnrädern ineinander eingreifen, dergestalt, daß der Vorverbund 1a beim Durchlauf durch den Streckprägespalt SP jeweils abwechselnd Einprägungen von der einen Oberfläche bzw. von der gegenüberliegenden Oberfläche erhält, so daß im Ergebnis gemäß Figur 3 von einer Seite der Materialbahn 1 her betrachtet sich Erhebungen 80 und entgegengesetzte Vertiefungen 81 jeweils wechselweise aneinanderreihen.

Auf diese Weise wird zum einen die gewünschte dreidimensionale Struktur der Materialbahn erzielt, welche dieser die gewünschten textilähnlichen Eigenschaften verleiht. Zum anderen erfährt jedoch der im Streckspalt S1 zwischen der Haltewalze 21 und der ersten Prägewalze 3 in Längsrichtung verstreckte Vorverbund 1a der Materialbahn 1 in den die Erhebungen 80 bzw. Vertiefungen 81 umgebenden Bereichen eine weitere Verstreckung, die jedoch radial umlaufend um die Erhebungen 80 bzw. Vertiefungen 81 verlaufend angeordnet sind und damit nicht nur in Längsrichtung der Materialbahn 1 weisen, sondern auch in Querrichtung, so daß aufgrund der Prägungen auch eine quasi biaxiale Mikroverstreckung der Materialbahn 1 erhalten wird.

Nachdem der solchermaßen im Streckspalt S1 in Längsrichtung verstreckte und im Streckprägespalt SP geprägte und quasi biaxial weiterverstreckte Vorverbund 1a den Streckprägespalt SP durchlaufen hat, wird der Vorverbund 1a unter Anlage der anderen, d. h. der die Vliesbahn 10 aufweisenden Oberfläche an der Prägewalze 4 in einstellbarer Umschlingung α 2 entlanggeführt, d. h. die die Vliesbahn 10 aufweisende Oberfläche des Vorverbundes 1a liegt auf der Prägeoberfläche der Prägewalze 4 auf.

Das Prägemuster auf der Prägewalze 4 entspricht, wie bereits ausgeführt im wesentlichen dem Prägemuster auf der Oberfläche der Prägewalze 3, ist jedoch vorteilhaft versetzt zu diesem angeordnet, so daß die rasterartigen Prägemuster nach Art einer Verzahnung ineinandergreifen.

Auch über die Prägewalze 4 wird der Vorverbund 1a in einem einstellbaren Umschlingungswinkel α2 geführt und nachfolgend von Walzenpaar 5 mit Walzen 50, 51 in teilweiser Umschlingung abgeführt, wobei jedoch die Walzen 50, 51 des zweiten Walzenpaares 5 mit einer höheren Drehzahl als die Prägewalze 4 und auch die Prägewalze 3 betrieben werden und zwischen der Prägewalze 4 und der Walze 50 ein zweiter Streckspalt S2 für den Vorverbund 1a ausgebildet ist. Auf diese Weise wird der Vorverbund 1a infolge der höheren Drehzahl des zweiten Walzenpaares 5 verstreckt, so daß eine weitere Verstreckung vor allem im Bereich der nicht geprägten Flächen und damit ein weiteres Öffnen der Poren in der den mineralischen Füllstoff enthaltenden Kunststoffolie 11 erzielt wird. Auch hierbei wird eine Verstreckung von z. B. 1:1,15 bis 1:1,4 wie im ersten Streckspalt S1 bewirkt.

Nachdem der Vorverbund 1a auch das zweite Haltewalzenpaar 5 durchlaufen hat und zweifach in Längsrichtung in den Streckspalten S1 und S2 verstreckt und dazwischen an beiden Oberflächen im Streckprägespalt SP geprägt worden ist, ist auf diese Weise aus dem Vorverbund 1a die gewünschte atmungsaktive Materialbahn 1 erzeugt worden, die durch die Verstreckung und Prägung der Kunststoffolie 11 einerseits eine besonders gute Atmungsaktivität bei hoher Wasserdichtigkeit aufweist und gleichzeitig durch die Prägung der Vliesbahn 10 auch eine voluminöse Struktur und einen textilartigen Griff aufweist.

Wie in Figur 1 dargestellt, kann die erhaltene atmungsaktive Materialbahn 1 nachfolgend noch einer Temperwalze 6 zugeführt werden, auf der sie getempert wird und gelangt nachfolgend über Abzugswalzen 7 zu einer hier nicht mehr dargestellten Aufwickeleinrichtung, von der sie der weiteren Verarbeitung zugeführt werden kann.

Zur Anpassung an verschiedene Rohstoffe sowie unterschiedliche Produktanforderungen können sämtliche in der Figur 1 dargestellten Walzen, d. h. die Walzen 20, 21 des ersten Haltewalzenpaares 2, die Prägewalzen 3, 4 sowie die Haltewalzen 50, 51 des zweiten Haltewalzenpaares 5 und auch die Temperwalze 6 mit unterschiedlichen Temperaturen je nach Anforderung temperiert werden, wobei das Prägen und Verstrecken z. B. bei einer Temperatur des Vorverbundes 1a von 90 bis 98°C durchgeführt wird.

Um darüber hinaus das auf den Prägewalzen 3, 4 festgelegte Prägemuster auch an unterschiedliche Dicken der Vliesbahn 10 und Kunststoffolie 11 des Vorverbundes 1a anpassen zu können, können die Haltewalzenpaare 2, 5 in ihrer Position relativ zur benachbarten Prägewalze 3 bzw. 4 gemäß Pfeilen A1 bzw. A2 verlagert werden, wodurch der jeweilige Umschlingungswinkel α 1 bzw. α2 auf den Prägewalzen 3, 4 verändert werden kann. Durch geringere Umschlingungswinkel α1 bzw. α2 kann bei gleichem Prägemuster auf den Prägewalzen 3, 4 eine geringere Schichtdicke der Vliesbahn 10 und Kunststoffolie 11 des Vorverbundes 1a durch die geringere Einwirkdauer verarbeitet werden, während bei größer werdenden Schichtdicken auch entsprechend der Umschlingungswinkel α1 bzw. α2 verändert wird und dennoch eine stets gleichbleibende Funktion der Prägungen erhalten wird.

Zu diesem Zweck sind die Haltewalzen 20, 21 des Haltewalzenpaares 2 mittels Tragarmen 22 schwenkbar um die Mittelachse M3 der Prägewalze 3 gelagert.

Ebenso sind die Walzen 50, 51 des Walzenpaares 5 mittels Tragarmen 52 schwenkbar an der Mittelachse M4 der Prägewalze 4 gelagert.

Die Eindringtiefe des Prägemusters und damit die Wirksamkeit der Streckprägung im Streckprägespalt SP wird durch eine radiale Verstellung T der Prägewalze 4 zur Prägewalze 3 eingestellt.

Es können Prägemuster mit Profiltiefen der Einprägungen bis zum Einhundertfachen der Dicke der ungeprägten Materialbahn 1 bzw. deren Vorverbund 1a erzielt werden.

Die Prägewalzen 3, 4 können darüber hinaus wahlweise entweder über ihre gesamte Breite Prägestrukturen gemäß Figur 3 aufweisen, so daß der Vorverbund 1a vollflächig mit den Prägungen versehen wird oder aber auch nur segmentweise mit derartigen oder unterschiedlichen Prägemustern an ihren Oberflächen versehen sein, so daß eine segmentierte Bearbeitung des Vorverbundes 1a zur atmungsaktiven Materialbahn 1 vorgenommen werden kann.

Es kann mit der Vorrichtung auch eine einschichtige, lediglich aus einer füllstoffhaltigen ein- oder mehrschichtigen Kunststoffolie bestehende Materialbahn 1 mit atmungsaktiven Eigenschaften in gleicher Weise hergestellt werden. Hierbei werden jedoch in den Streckspalten S1 und S2 höhere Verstreckungen von z. B. jeweils bis zu 1:2, d. h. insgesamt bis zu 1:4 in Längsrichtung erzeugt.

Die solchermaßen hergestellten atmungsaktiven Materialbahnen sind aufgrund ihrer hohen Atmungsaktivität und Wasserdichtigkeit sowie ihres textilen Griffes insbesondere zur Anwendung im Hygienebereich als sogenannte Back-Sheets für Windeln und ähnliches geeignet, wie sie sich auch für Anwendungen in der Textil- und Bekleidungsindustrie eignen, bei denen Wert auf einen textilartigen Griff und geringe Geräuschentwicklung der eingesetzten atmungsaktiven Materialbahnen gelegt wird.

## Patentansprüche

1. Verfahren zum Herstellen einer atmungsaktiven Materialbahn, die zumindest aus einer Schicht auf Basis einer einen mineralischen Füllstoff enthaltenden Kunststoffolie gebildet ist, wobei die Materialbahn in der Weise verstreckt wird, daß Atmungsaktivität der den Füllstoff enthaltenden Kunststoffolie erhalten wird, **dadurch gekennzeichnet, daß** die Materialbahn in zwei aufeinanderfolgenden Schritten jeweils in Längsrichtung derselben verstreckt wird und zwischen den beiden das Verstrecken in Längsrichtung bewirkenden Schritten zumindest bereichsweise oberflächlich geprägt wird.

2. Verfahren nach Anspruch 1, **dadurch gekennzeichnet, daß** die Materialbahn mittels der Einprägungen örtlich begrenzt biaxial verstreckt wird.

3. Verfahren nach Anspruch 1 oder 2; **dadurch gekennzeichnet, daß** die Materialbahn in einem zwischen zwei Prägewalzen (3, 4) ausgebildeten Streckprägespalt (SP) geprägt wird, wobei die Materialbahn zunächst über ein Haltewalzenpaar (20, 21) der ersten Prägewalze (3) unter Ausbildung eines ersten Streckspaltes (S1) zugeführt wird und im Streckspalt (S1) in Längsrichtung derselben verstreckt wird, sodann unter teilweiser Umschlingung der ersten Prägewalze (3) dem Streckprägespalt (SP) zugeführt wird und nach dem Durchtritt durch den Streckprägespalt (SP) unter teilweiser Umschlingung der zweiten Prägewalze (4) abgeführt wird und nachfolgend über ein Walzenpaar (50, 51) unter Ausbildung eines zweiten Streckspaltes (S2) zwischen der Prägewalze (4) und dem Walzenpaar (50, 51) geführt wird und die Materialbahn im zweiten Streckspalt (S2) erneut in Längsrichtung derselben verstreckt wird.

4. Verfahren nach Anspruch 3, **dadurch gekennzeichnet, daß** die Prägewalzen (3, 4) mit gleicher Drehzahl und gegenläufigem Drehsinn angetrieben werden und das Haltewalzenpaar (20, 21) und das Walzenpaar (50, 51) mit demgegenüber unabhängig einstellbaren Drehzahlen angetrieben werden.

5. Verfahren nach einem der Ansprüche 3 oder 4, **dadurch gekennzeichnet, daß** die Umschlingungswinkel (α1, α2) der Materialbahn auf den Prägewalzen (3, 4) veränderbar sind.

6. Verfahren nach einem der Ansprüche 1 bis 5, **dadurch gekennzeichnet, daß** beide Oberflächen der Materialbahn wechselweise mit miteinander korrespondierenden, geometrisch versetzt zueinander angeordneten und gerasterten Einprägungen geprägt werden, dergestalt, daß bei Ausbildung einer Vertiefung in einer Oberfläche der Materialbahn auf der anderen Oberfläche im korrespondierenden Bereich eine Erhöhung ausgebildet wird und umgekehrt.

7. Verfahren nach Anspruch 6, **dadurch gekennzeichnet, daß** kegel- oder pyramidenstumpfartige Einprägungen in die Materialbahn eingeprägt werden.

8. Verfahren nach einem der Ansprüche 1 bis 7, **dadurch gekennzeichnet, daß** die Tiefe der Einprägungen in die Materialbahn veränderbar ist.

9. Verfahren nach einem der Ansprüche 1 bis 8, **dadurch gekennzeichnet, daß** die Materialbahn vor dem Prägen und Verstrecken vorgewärmt wird.

10. Verfahren nach einem der Ansprüche 1 bis 9, **dadurch gekennzeichnet, daß** das Verstrecken der Materialbahn in Längsrichtung derselben bei einer Temperatur der Materialbahn von etwa 90 bis 98°C durchgeführt wird.

11. Verfahren nach einem der Ansprüche 1 bis 10, **dadurch gekennzeichnet, daß** eine Profiltiefe der Einprägungen bis zum Einhundertfachen der Dicke der ungeprägten Materialbahn erzeugt wird.

12. Verfahren nach einem der Ansprüche 1 bis 11, **dadurch gekennzeichnet, daß** eine ein- oder mehrschichtige Materialbahn aus der füllstoffhaltigen Kunststoffolie einer Dicke von etwa 20 bis 50 *µ*m eingesetzt wird und die Materialbahn in den beiden Schritten jeweils im Verhältnis von bis zu 1:2 in Längsrichtung verstreckt wird.

13. Verfahren nach einem der Ansprüche 1 bis 11, **dadurch gekennzeichnet, daß** eine Materialbahn mit einer Schicht aus einer Vliesbahn auf Basis von Kunststoffilamenten und/oder Kunststoffasern mit einem Flächengewicht von 10 bis 50 g/m² und einer mit dieser haftfest verbundenen weiteren Schicht aus einer füllstoffhaltigen Kunststoffolie mit einem Flächengewicht von 5 bis 35 g/m² eingesetzt wird und die Materialbahn in den beiden Schritten jeweils im Verhältnis 1:1,15 bis 1:1,4 in Längsrichtung derselben verstreckt wird.

14. Verfahren nach Anspruch 13, **dadurch gekennzeichnet, daß** die Materialbahn unter Auflage der die Kunststoffolie aufweisenden Oberfläche auf der Prägewalze (3) dem Streckprägespalt (SP) zugeführt wird und unter Auflage der die Vliesbahn aufweisenden Oberfläche auf der Prägewalze (4) von dem Streckprägespalt (SP) abgeführt wird.

15. Verfahren nach einem der Ansprüche 1 bis 14, **dadurch gekennzeichnet, daß** eine Kunststoffolie (11) mit einem Gehalt von bis zu 70 % eines mineralischen Füllstoffes, wie Calciumcarbonat, für die Materialbahn eingesetzt wird.

16. Verfahren nach einem der Ansprüche 1 bis 15, **dadurch gekennzeichnet, daß** die Materialbahn auf Basis von Polyolefinen, wie Polyethylen oder Polypropylen oder Abmischungen derselben ausgebildet ist.

17. Verfahren nach einem der Ansprüche 1 bis 16, **dadurch gekennzeichnet, daß** die Materialbahn nach dem Verstrecken und Prägen getempert wird.

18. Vorrichtung zur Durchführung des Verfahrens gemäß einem der Ansprüche 1 bis 17, mit einer Zuführeinrichtung für die Materialbahn, einer Streckeinrichtung zum Verstrecken der Materialbahn und einer Aufwickeleinrichtung für die Materialbahn, **dadurch gekennzeichnet, daß** die Streckeinrichtung ein Haltewalzenpaar (20, 21), ein nachgeordnetes Prägewalzenpaar (3, 4) sowie ein diesem nachgeordnetes Walzenpaar (50, 51) umfaßt, über die die Materialbahn aufeinanderfolgend führbar ist, wobei zwischen dem Haltewalzenpaar (20, 21) und der ersten Prägewalze (3) des Prägewalzenpaares ein erster Streckspalt (S1) für ein erstes Verstrecken der Materialbahn in deren Längsrichtung ausbildbar ist, zwischen den Prägewalzen (3, 4) des Prägewalzenpaares ein Streckprägespalt (SP) zum zumindest bereichsweisen oberflächlichen Prägen der Materialbahn ausbildbar ist und zwischen der zweiten Prägewalze (4) des Prägewalzenpaares und dem Walzenpaar (50, 51) ein zweiter Streckspalt (S2) für ein zweites Verstrecken der Materialbahn in deren Längsrichtung ausbildbar ist.

19. Vorrichtung nach Anspruch 18, **dadurch gekennzeichnet, daß** der Streckprägespalt (SP) zwischen den Prägewalzen (3, 4) in seiner lichten Höhe verstellbar ist.

20. Vorrichtung nach einem der Ansprüche 18 oder 19, **dadurch gekennzeichnet, daß** die Position des Haltewalzenpaares (20, 21) zur Prägewalze (3) und/oder des Walzenpaares (50, 51) zur Prägewalze (4) veränderbar ist, dergestalt, daß der Umschlingungswinkel (α1, α2) der über die Prägewalzen (3, 4) führbaren Materialbahn veränderbar ist.

21. Vorrichtung nach Anspruch 20, **dadurch gekennzeichnet, daß** das Haltewalzenpaar (20, 21) bzw. das Walzenpaar (50, 51) mittels Tragarmen (22 bzw. 52) schwenkbar um die Mittelachse (M3 bzw. M4) der Prägewalzen (3 bzw. 4) an diesen gehaltert sind.

22. Vorrichtung nach einem der Ansprüche 18 bis 20, **dadurch gekennzeichnet, daß** die Prägewalzen (3, 4) mit pyramiden- oder kegelstumpfförmigen, rasterartig angeordneten und gegenseitig ineinandergreifenden Prägestrukturen (300, 400) ausgebildet sind.

23. Vorrichtung nach einem der Ansprüche 18 bis 21, **dadurch gekennzeichnet, daß** die Prägewalzen (3, 4), das Haltewalzenpaar (20, 21) sowie das Walzenpaar (50, 51) getrennte Drehantriebe aufweisen und unabhängig voneinander temperierbar sind.

24. Vorrichtung nach einem der Ansprüche 18 bis 23, **dadurch gekennzeichnet, daß** die Zuführeinrichtung eine Vorwärmeinrichtung (9a, 9b) zur Vorwärmung der Materialbahn umfaßt.

25. Vorrichtung nach einem der Ansprüche 18 bis 24, **dadurch gekennzeichnet, daß** der Streckeinrichtung nachgeordnet mindestens eine Temperwalze (6) zum Tempern der Materialbahn vorgesehen ist.

## Claims

1. A method for production of a breathable web, which is formed from at least one layer based on a mineral filler-containing plastic film, wherein the web is stretched so that the breathability of the filler-containing plastic film is obtained, **characterized in that** the web is stretched in two successive steps in a longitudinal direction of the web and is embossed on a surface at least in areas, between the two steps of stretching in the longitudinal direction.

2. The method according to claim 1, **characterized in that** the web is stretched biaxially, in a limited manner, locally, by the embossings.

3. The method according to claim 1 or 2, **characterized in that** the web is embossed in a stretch-embossing slot (SP) formed between two embossing rollers (3, 4) wherein the web is first supplied via a holding roller pair (20, 21) to the first embossing roller (3), with the formation of a first stretching slot (S1), and is stretched in the longitudinal direction in the stretching slot (S1), then is conducted to the stretch-embossing slot (SP) with a first partial looping of the first embossing roller (3), and after passing through the stretch-embossing slot (SP) with a second partial looping of the second embossing roller (4) is conducted away and subsequently is conducted via a roller pair (50, 51) with the formation of a second stretching slot (S2) between the embossing roller (4) and the roller pair (50, 51), and the web is stretched again in the longitudinal direction in the second stretching slot (S2).

4. The method according to claim 3, **characterized in that** the embossing rollers (3, 4) are driven at a same speed and in an opposite rotating direction, and the holding roller pair (20, 21) and the roller pair (50, 51) are driven at speeds which are independently adjustable.

5. The method according to any of the claims 3 or 4, **characterized in that** the looping angles (α1, α2) of the web on the embossing rollers (3, 4) are changeable.

6. The method according to any of the claims 1 to 5, **characterized in that** both surfaces of the web are alternately embossed with embossings which are arranged in grids and are geometrically staggered with respect to one another, and which correspond with one another so that with the formation of an indentation in one of the surfaces of the web, an elevation is formed on an other of the surfaces in a corresponding area.

7. The method according to claim 6, **characterized in that** one of conical and truncated pyramid embossings are imprinted onto the web.

8. The method according to any of the claims 1 to 7, **characterized in that** a depth of the embossings in the web is changeable.

9. The method according to any of the claims 1 to 8, **characterized in that** the web is preheated before the embossing and the stretching.

10. The method according to any of the claims 1 to 9, **characterized in that** the stretching of the web is carried out in the longitudinal direction at a web temperature of approximately 90 to 98° C.

11. The method according to any of the claims 1 to 10, **characterized in that** a profile depth of the embossings is produced up to one hundred times a thickness of the nonembossed web.

12. The method according to any of the claims 1 to 11, **characterized in that** the web is one of a monolayer web and a multilayer web made of a filler-containing plastic film with a thickness of approximately 20 to 50 µm and the web is stretched in a ratio of up to 1:2 at the longitudinal direction in the two steps.

13. The method according to any of the claims 1 to 11, **characterized in that** the web has a layer of a nonwoven web based on at least one of plastic filaments and/or plastic fibers with a weight per unit area of 10-50 g/m², and a further layer of a filler-containing plastic film with a weight per unit area of 5 to 35 g/m² joined adhesively with the first layer, and the web is stretched at a ratio of 1:1,15 to 1:1,4 in the longitudinal direction in the two steps.

14. The method according to claim 13, **characterized in that** the web is conducted to the stretch-embossing slot (SP) with placement of the surface which has the plastic film on the embossing roller (3), and is conducted away from the stretch-embossing slot (SP) with placement of the surface with the nonwoven web on the embossing roller (4).

15. The method according to any of the claims 1 to 14, **characterized in that** the web is of a plastic film (11) with a content of up to 70% of a mineral filler, like calcium carbonate.

16. The method according to any of the claims 1 to 15, **characterized in that** the web is formed on the basis of polyolefins, like polyethylene or polypropylene or mixtures thereof.

17. The method according to any of the claims 1 to 16, **characterized in that** the web is tempered after the stretching and the embossing.

18. An apparatus for conducting the method according to any of the claims 1 to 17, having a supply device for the web, a stretching device for the stretching of the web, and a wind-up device for the web, **characterized in that** the stretching device comprises a holding roller pair (20, 21), a downstream embossing roller pair (3, 4), and a downstream roller pair (50, 51) by which the web is successively moved, wherein a first stretching slot (S1) for a first stretching of the web in a longitudinal direction of the web is formed between the holding roller pair (20, 21) and the first embossing roller (3); a stretch-embossing slot (SP) for a surface embossing of the web at least in certain sectors is formed between the embossing rollers of the embossing roller pair (3, 4); and a second stretching slot (S2) for a second stretching of the web in the longitudinal direction is formed between a second embossing roller (4) of the embossing roller pair (3, 4) and the roller pair (50, 51).

19. The apparatus according to claim 18, **characterized in that** the stretch-embossing slot (SP) has an adjustable height between the embossing rollers.

20. The apparatus according to any of the claims 18 to 19, **characterized in that** the position of the holding roller pair (20, 21) with respect to the embossing roller (3) and/or the roller pair (50, 51) with respect to the second embossing roller (4) is changeable so that a looping angle (α1, α2) of the web which is moveable via the embossing rollers (3, 4) is changeable.

21. The apparatus according to claim 20, **characterized in that** the holding roller pair (20, 21) and the roller pair (50, 51) is supported by supporting arms (22 or 52) to swivel around a middle axis (M3 or M4) of one of the embossing rollers (3 or 4), respectively.

22. The apparatus according to any of the claims 18 to 20, **characterized in that** the embossing rollers (3, 4) are formed with embossing structures (300, 400) arranged in a shape of pyramids or truncated cones and in a form of grids and mesh into one another.

23. The apparatus according to any of the claims 18 to 21, **characterized in that** the embossing rollers (3, 4), the holding roller pair (20, 21), and the roller pair (50, 51) have separate rotating drives and are tempered independently of one another.

24. The apparatus according to any of the claims 18 to 23, **characterized in that** the supply device comprises a preheating device (9a, 9b) for preheating the web.

25. The apparatus according to any of the claims 18 to 24, **characterized in that** downstream from the stretching device there is provided at least one tempering roller (6) for tempering the web.

## Revendications

1. Procédé pour fabriquer une bande de matériau à respiration active qui est formée d'une couche à base d'un film de matière synthétique contenant une matière de remplissage minérale, dans lequel la bande de matériau est étirée de telle manière que l'activité de respiration du film de matière synthétique contenant la matière de remplissage soit maintenue, **caractérisé en ce que** la bande de matériau est étirée en deux étapes successives à chaque fois dans le sens longitudinal de celle-ci et est gaufrée au moins partiellement en surface entre les deux étapes provoquant l'étirement dans le sens longitudinal.

2. Procédé selon la revendication 1, **caractérisé en ce que** la bande de matériau est étirée biaxialement de manière localement limitée au moyen des gaufrages.

3. Procédé selon la revendication 1 ou 2, **caractérisé en ce que** la bande de matériau est gaufrée dans une fente de gaufrage - étirement (SP) formée entre deux cylindres de gaufrage (3, 4), la bande de matériau étant tout d'abord amenée via une paire de cylindres de retenue (20, 21) jusqu'au premier cylindre de gaufrage (3) avec formation d'une première fente d'étirement (S1) et est étirée dans la fente d'étirement (S1) dans le sens longitudinal de celle-ci, puis est amenée jusqu'à la fente de gaufrage - étirement (SP) en s'enroulant en partie autour du premier cylindre de gaufrage (3) et après être passée par la fente de gaufrage - étirement (SP) est évacuée en s'enroulant en partie autour du deuxième cylindre de gaufrage (4) et est ensuite guidée via une paire de cylindres (50, 51) avec formation d'une deuxième fente d'étirement (S2) entre le cylindre de gaufrage (4) et la paire de cylindres (50, 51) et la bande de matériau est de nouveau étirée dans la deuxième fente d'étirement (S2) dans le sens longitudinal de celle-ci.

4. Procédé selon la revendication 3, **caractérisé en ce que** les cylindres de gaufrage (3, 4) sont entraînés à la même vitesse de rotation et en sens de rotation inverse et la paire de cylindres de retenue (20, 21) et la paire de cylindres (50, 51) sont entraînés à des vitesses de rotation pouvant par contre être réglées de manière indépendante.

5. Procédé selon une des revendications 3 ou 4, **caractérisé en ce que** les angles d'enroulement (α1, α2) de la bande de matériau sur les cylindres de gaufrage (3, 4) peuvent être modifiés.

6. Procédé selon l'une quelconque des revendications 1 à 5, **caractérisé en ce que** les deux surfaces de la bande de matériau sont gaufrées avec des gaufrages qui sont disposés en réseau et géométriquement décalés l'un par rapport à l'autre et qui correspondent l'un à l'autre de telle sorte qu'avec la formation d'une dépression dans une surface de la bande de matériau, une élévation est formée dans la zone correspondante sur l'autre surface et vice-versa.

7. Procédé selon la revendication 6, **caractérisé en ce que** des gaufrages en forme de cône tronqué ou de pyramide tronquée sont estampés dans la bande de matériau.

8. Procédé selon l'une quelconque des revendications 1 à 7, **caractérisé en ce que** la profondeur des gaufrages dans la bande de matériau peut être modifiée.

9. Procédé selon l'une quelconque des revendications 1 à 8, **caractérisé en ce que** la bande de matériau est préchauffée avant le gaufrage et l'étirement.

10. Procédé selon l'une quelconque des revendications 1 à 9, **caractérisé en ce que** l'étirement de la bande de matériau dans le sens longitudinal de celle-ci est effectué à une température de la bande de matériau d'approximativement 90 à 98° C.

11. Procédé selon l'une quelconque des revendications 1 à 10, **caractérisé en ce qu'**une profondeur de profil des gaufrages est produite représentant jusqu'à cent fois l'épaisseur de la bande de matériau non gaufrée.

12. Procédé selon l'une quelconque des revendications 1 à 11, **caractérisé en ce qu'**une bande de matériau monocouche ou multicouche réalisée à partir du film de matière synthétique d'une épaisseur d'approximativement 20 à 50 µm contenant la matière de remplissage est utilisée et la bande de matériau est étirée dans le sens longitudinal à chaque fois dans un rapport allant jusqu'à 1 : 2 au cours des deux étapes.

13. Procédé selon l'une quelconque des revendications 1 à 11, **caractérisé en ce qu'**une bande de matériau comprenant une couche composée d'une bande de non-tissé à base de filaments de matière synthétique et / ou de fibres de matière synthétique ayant un poids par unité de surface de 10 à 15 g / m² et une autre couche liée de manière adhésive à celle-ci, composée d'un film de matière synthétique contenant la matière de remplissage et ayant un poids par unité de surface de 5 à 35 g / m² est utilisée et la bande de matériau est étirée dans le sens longitudinal à chaque fois dans un rapport allant de 1 : 1,15 à 1 : 1,4 au cours des deux étapes.

14. Procédé selon la revendication 13, **caractérisé en ce que** la bande de matériau est amenée jusqu'à la fente de gaufrage - étirement (SP) en appuyant sur le cylindre de gaufrage (3) la surface présentant le film de matière synthétique et est évacuée de la fente de gaufrage - étirement (SP) en appuyant sur le cylindre de gaufrage (4) la surface présentant la bande de non-tissé.

15. Procédé selon l'une quelconque des revendications 1 à 14, **caractérisé en ce qu'**un film de matière synthétique (11) ayant une teneur allant jusqu'à 70 % d'une matière de remplissage minérale, telle que du carbonate de calcium, est utilisée pour la bande de matériau.

16. Procédé selon l'une quelconque des revendications 1 à 15, **caractérisé en ce que** la bande de matériau est formée à base de polyoléfines, telles que des polyéthylènes ou des polypropylènes ou des mélanges de ceux-ci.

17. Procédé selon l'une quelconque des revendications 1 à 16, **caractérisé en ce que** la bande de matériau est tempérée.

18. Dispositif pour mettre en oeuvre le procédé selon une quelconque des revendications 1 à 17, comprenant un dispositif d'alimentation pour la bande de matériau, un dispositif d'étirement pour étirer la bande de matériau et un dispositif d'enroulement pour la bande de matériau, **caractérisé en ce que** le dispositif d'étirement comprend une paire de cylindres de retenue (20, 21), une paire de cylindres de gaufrage (3, 4) disposée en aval ainsi qu'une paire de cylindre (50, 51) disposée en aval de celle-ci par lesquelles la bande de matériau peut être successivement entraînée, dans lequel une première fente d'étirement (S1) peut être formée entre la paire de cylindres de retenue (20, 21) et le premier cylindre de gaufrage (3) de la paire de cylindres de gaufrage pour un premier étirement de la bande de matériau dans son sens longitudinal, une fente de gaufrage - étirement (SP) peut être formée entre les cylindres de gaufrage (3, 4) de la paire de cylindres de gaufrage pour gaufrer au moins partiellement en surface la bande de matériau et une deuxième fente d'étirement (S2) peut être formée entre le deuxième cylindre de gaufrage (4) de la paire de cylindres de gaufrage et la paire de cylindres (50, 51) pour un deuxième étirement de la bande de matériau dans son sens longitudinal.

19. Dispositif selon la revendication 18, **caractérisé en ce que** la fente de gaufrage - étirement (SP) entre les cylindres de gaufrage (3, 4) peut être réglée pour ce qui est de sa hauteur intérieure.

20. Dispositif selon l'une des revendications 18 ou 19, **caractérisé en ce que** la position de la paire de cylindres de retenue (20, 21) par rapport au cylindre de gaufrage (3) et/ou de la paire de cylindres (50, 51) par rapport au cylindre de gaufrage (4) peut être modifiée de telle manière que l'angle d'enroulement (α1, α2) de la bande de matériau guidée sur les cylindres de gaufrage (3, 4) puisse être modifié.

21. Dispositif selon la revendication 20, **caractérisé en ce que** la paire de cylindres de retenue (20, 21) ou encore la paire de cylindres (50, 51) sont supportées au moyen de bras porteurs (22 ou encore 52) sur les cylindres de gaufrage (3, 4) de manière à pivoter autour de l'axe central (M3 ou encore M4) de ceux-ci.

22. Dispositif selon l'une quelconque des revendications 18 à 20, **caractérisé en ce que** les cylindres de gaufrage (3, 4) sont formés avec des structures de gaufrage (300, 400) en forme de cône tronqué ou de pyramide tronquée, disposées en réseau et s'engrenant les unes dans les autres.

23. Dispositif selon l'une quelconque des revendications 18 à 21, **caractérisé en ce que** les cylindres de gaufrage (3, 4), la paire de cylindres de retenue (20, 21) ainsi que la paire de cylindres (50, 51) présentent des entraînement rotatifs séparés et peuvent être tempérés indépendamment les uns des autres.

24. Dispositif selon l'une quelconque des revendications 18 à 23, **caractérisé en ce que** le dispositif d'alimentation comprend un dispositif de préchauffage (9a, 9b) pour préchauffer la bande de matériau.

25. Dispositif selon l'une quelconque des revendications 18 à 24, **caractérisé en ce qu'**il est prévu au moins un cylindre (6) de températion disposé en aval du dispositif d'étirement pour tempérer la bande de matériau.
